# EUROPÄISCHE PATENTANMELDUNG

(11) **EP 2 763 401 A1**
(43) Veröffentlichungstag der Anmeldung: **06.08.2014**
(21) Anmeldenummer: 13153777.1
(22) Anmeldetag: 02.02.2013
(51) Int. Cl.: H04N 5/44, G06F 3/14, H04N 21/61, H04N 21/214, H04N 21/2343, H04N 21/414, H04N 21/4402, H04N 21/41, H04N 21/418

(54) **Eingebettetes System zur Videoverarbeitung mit Hardware-Mitteln**

(71) Anmelder: Novomatic AG, 2352 Gumpoldskirchen (AT)
(72) Erfinder: Die Erfindernennung liegt noch nicht vor

(57) **Zusammenfassung**

Eingebettetes System zur Videoverarbeitung mit Hardware-Mitteln zum Realisieren folgender Funktionen:
a) einer Server-Funktion, wobei zum Realisieren der Server-Funktion die folgenden Funktionen realisiert sind:
a1) Annahme von mindestens einem Bild-, mindestens einem Audio-Datenstrom;
a2) Kompression mindestens eines der Bild- und Audio-Datenströme in jeweils einen kombinierten Datenstrom;
a3) Ausgabe mindestens eines der kombinierten Datenströme über ein protokollbasiertes Netzwerk;

b) einer Client-Funktion, wobei zum Realisieren der Client-Funktion die folgenden Funktionen realisiert sind:
b1) Annahme mindestens eines kombinierten Datenstroms aus dem protokollbasierten Netzwerk;
b2) Dekompression des mindestens einen kombinierten Datenstroms;
b3) Ausgabe des dekomprimierten Bild- und Audio-Datenstroms; und

c) wobei die Hardware-Mittel derart ausgelegt sind, dass sie einen kontinuierlichen kombinierten Datenstrom komprimieren und dekomprimieren können.

## Beschreibung

Die Erfindung betrifft ein eingebettetes System zur Videoverarbeitung und ein Videoverteilungssystem. Derartige Vorrichtungen dienen vorwiegend zum Verteilen von Videodaten aus mehreren Quellen an mehrere Darstellungseinheiten (z. B. Bildschirme). Ein typischer Anwendungsbereich sind Wettbüros.

Es sind verschiedene Möglichkeiten bekannt, um TV-Inhalte über ein IP-Netzwerk zu liefern. Die Unterscheidung zwischen IPTV und Internet-TV besteht aus der Zugriffsmethode. Im Falle von IPTV führt eine lokale netzbetreiberspezifische Anwendung die Inhaltsnavigation aus, während im Falle des Internet TV eine auf Standards basierender Browser verwendet wird, um die Navigation des Inhalts zu ermöglichen. In beiden Fällen liefert ein solcher Service Video-Content über einen Internet-Anschluss an das TV-Gerät eines Zuschauers bzw. Benutzers.

Die EP2247108A1 "Distributed TV access system" offenbart eine Online-Anwendung für die Navigation von Ausstrahlungen (Broadcast-Signale, d.h. Rund- bzw. Fernsehsignale) die durch ein Netzwerk wie Kabel oder Satellit übertragen werden. Ein Kunde empfängt die Broadcast-Signale durch eine erste Netzwerkverbindung, und navigiert die Fernsehinhalte durch eine Online-Anwendung über ein zweites Netzwerk. Der erste Netzverbindung und die zweite Netzverbindung können zwei Anschlüsse auf dem gleichen Netzwerk sein (z.B. zwei Verbindungen über zwei unterschiedliche Software-Ports) oder zwei Verbindungen in zwei verschiedenen Netzwerken sein (z.B. dem Internet und einem privaten TV-Netz wie ein Kabel von Satelliten TV-Netz).

Aufgabe der Erfindung ist es, eine Vorrichtung anzugeben, die die Nachteile des Standes der Technik vermeidet oder minimiert und vielseitiger einsetzbar ist. Insbesondere wird durch die erfindungsgemäßen Maßnahmen eine höhere Flexibilität in den Modi und den Anschlüssen und Auflösungen erreicht und eine hohe Kombinationsvielfalt in der Verarbeitung verschiedenster Broadcast-Signale und Zurverfügungstellung dieser an den Benutzer erreicht. Weiters wird durch diese Maßnahmen eine vorteilhafte Skalierbarkeit bezüglich Anzahl der Teilnehmer und Aufbau des Systems erzielt und Echtzeitfähigkeit und Sicherheit der Signalverarbeitung ermöglicht.

Diese Aufgabe wird durch die Erfindungen mit den Merkmalen der unabhängigen Ansprüche gelöst. Vorteilhafte Weiterbildungen der Erfindungen sind in den Unteransprüchen gekennzeichnet. Der Wortlaut sämtlicher Ansprüche wird hiermit durch Bezugnahme zum Inhalt dieser Beschreibung gemacht. Die Erfindungen umfassen auch alle sinnvollen und insbesondere alle erwähnten Kombinationen von unabhängigen und/oder abhängigen Ansprüchen.

Vorgeschlagen wird ein eingebettetes System zur Videoverarbeitung mit Hardware-Mitteln zum Realisieren folgender Funktionen:
a) einer Server-Funktion, wobei zum Realisieren der Server-Funktion die folgenden Funktionen realisiert sind:
   a1) Annahme von mindestens einem Bild-, mindestens einem Audio-Datenstrom;
   a2) Kompression mindestens eines der Bild- und Audio-Datenströme in jeweils einen kombinierten Datenstrom;
   a3) Ausgabe mindestens eines der kombinierten Datenströme über ein protokollbasiertes Netzwerk;
   b) einer Client-Funktion, wobei zum Realisieren der Client-Funktion die folgenden Funktionen realisiert sind:
   b1) Annahme mindestens eines kombinierten Datenstroms aus dem protokollbasierten Netzwerk;
   b2) Dekompression des mindestens einen kombinierten Datenstroms; b3) Ausgabe des dekomprimierten Bild- und Audio-Datenstroms; und
   c) wobei die Hardware-Mittel derart ausgelegt sind, dass sie einen kontinuierlichen Bild-und Audio-Datenstrom mit mindestens 24 Bildern pro Sekunde, bevorzugt mindestens 25 Bildern pro Sekunde, besonders bevorzugt mindestens 50 Bildern pro Sekunde und ganz besonders bevorzugt mindestens 60 Bildern pro Sekunde ohne Datenstau komprimieren und dekomprimieren können.

Vorteilhaft ist es, wenn die Hardware-Mittel derart ausgelegt sind, dass sie einen kontinuierlichen Bild- und Audio-Datenstrom mit mindestens 60 Bildern pro Sekunde und mit einer Auflösung von mindestens 1280 × 720, bevorzugt mindestens 1920 × 1080 Pixeln ohne Datenstau komprimieren und dekomprimieren können. Das eingebettete System ist also in der Lage, Datenströme in "Full HD"-Auflösung zu verarbeiten.

Weiterhin ist es von Vorteil, wenn die Kompression der Datenströme gemäß dem H.264-oder dem H.265-Standard erfolgt. Dadurch wird eine besonders hohe Kompressionsrate für Video-Datenströme ermöglicht, so dass die benötigte Bandbreite für die Datenübertragung über das Netzwerk möglichst gering gehalten werden kann. Die Unterstützung anderer Kompressions-Standards, wie beispielsweise MPEG-2, ist auch vorgesehen.

Bei einer vorteilhaften Weiterbildung der Erfindung realisiert
a) die Server-Funktion eine Funktion zum Verschlüsseln des kombinierten Datenstroms;
und b) die Client-Funktion eine Funktion zum Entschlüsseln des mindestens einen kombinierten Datenstroms.

Diese Ver- und Entschlüsselung erfolgt in Echtzeit mit Hardware-Mitteln, vorzugsweise nach dem AES-Verschlüsselungsverfahren ("advanced encryption standard"), vorzugsweise mit einer Schlüssellänge von mindestens 256 Bit. Dadurch können die Daten vor Angreifern in der Übertragungsstrecke zwischen Server und Client geschützt werden.

Bei einer weiteren vorteilhaften Weiterbildung verfügt das erfindungsgemäße eingebettete System über
a) Hardware-Mittel zur Annahme von mehr als einem kombinierten Datenstrom über das Protokoll-basierte Netzwerk;
b) Hardware-Mittel zur Dekompression von mehr als einem kombinierten Datenstrom;
c) Hardware-Mittel zur Skalierung und/oder Rotation und/oder Vereinigung und/oder Überblendung von mehr als einem dekomprimierten Bild- und Audio-Datenstrom;
d) Hardware-Mittel zur gemeinsamen Ausgabe von mehr als einem dekomprimierten Bild- und Audio-Datenstrom zur gleichzeitigen Darstellung an einem Bildschirm; und
e) Hardware-Mittel zur geteilten Ausgabe von einem oder mehreren kombinierten Datenströmen an mehrere Bildschirme, die als Videowand angeordnet sind.

Dadurch lassen sich neben der üblichen Darstellung eines Videodatenstroms an einem Bildschirm - durch die Skalierungsmittel in beliebiger Größe - eine ganze Reihe weiterer Darstellungsmodi erreichen, beispielsweise
○ zwei Ströme gleichzeitig, mit wählbarer Größe und Positionierung;
○ ein Strom wird über einen zweiten überblendet;
○ vier verschiedene Ströme gleichzeitig;
○ drei Ströme gleichzeitig an einem um 90° rotierten Bildschirm;
○ sechs Ströme an einem Bildschirm (einer groß, fünf klein);
○ Videowand mit vier oder neun Bildschirmen.

Von Vorteil ist es außerdem, wenn das erfindungsgemäße eingebettete System über Hardware-Mittel zum Konvertieren eines im Zeilensprungverfahren aufgenommenen Bilddatenstroms zum Vollbildverfahren verfügt. Dadurch kann in Echtzeit ein progressiver Videodatenstrom in hoher Qualität erzeugt werden, selbst wenn die Videoquelle lediglich im Zeilensprungverfahren (interlaced) aufgenommenes Material bereitstellt.

Bei einer vorteilhaften Weiterbildung verfügt das erfindungsgemäße eingebettete System über
a) ein Speichermodul mit einem BIOS;
b) ein Speichermodul mit einem Betriebssystem; sowie
c) Mittel zum Annehmen von Steuersignalen über das protokollbasierte Netzwerk.

Dadurch wird erreicht, dass das erfindungsgemäße eingebettete System unabhängig von anderen Geräten arbeiten kann ("standalone") und insbesondere zum Betrieb nicht an einen Computer angeschlossen werden muss.

Jedoch kann das eingebettete System über das protokollbasierte Netzwerk gesteuert werden, z. B. hinsichtlich der Wahl der Quellen der Datenströme und des gewünschten Übertragungsformats (Server), oder z. B. hinsichtlich der Auswahl der darzustellenden Datenströme und des Darstellungsmodus (Client).

Eine weitere vorteilhafte Weiterbildung des erfindungsgemäßen eingebetteten Systems verfügt über Mittel zum Ausgeben von Steuersignalen zur Fernbedienung angeschlossener Geräte.

Dadurch lassen sich über das eingebettete System auch die angeschlossenen Geräte fernsteuern, beispielsweise Satellitenfernseh-Empfänger (Server) oder Bildschirme (Client), ohne dass dazu zusätzliche Fernbedienungseinheiten benötigt werden. Die Steuersignale können dabei, je nach Art des fernzusteuernden Geräts, über eine ggf. vorhandene Infrarot-Schnittstelle oder über einen ggf. vorhandenen HDMI-Ausgang oder auch über das Netzwerk ausgegeben werden. Dadurch, dass die Steuerbefehle über das Netzwerk an das eingebettete System übermittelt werden können, ist es also möglich, die angeschlossenen Geräte auch über größere Entfernungen und ggf. über bauliche Hindernisse hinweg zu bedienen. Die Bedienung kann dabei lokal für einzelne oder auch zentral für alle an das Netzwerk angeschlossenen erfindungsgemäßen eingebetteten Systeme erfolgen.

Vorteilhaft ist außerdem, wenn das eingebettete System über
a) Hardware-Mittel zur Zwischenspeicherung und wiederholten Ausgabe des mindestens einen kombinierten Datenstroms; und über
b) Mittel zur interaktiven Steuerung des eingebetteten Systems durch den Betrachter des mindestens einen ausgegebenen Datenstroms verfügt.

Vorteilhaft ist außerdem, wenn das eingebettete System Hardware-Mittel zur Verbesserung der Bildqualität des Bildddatenstroms verfügt, welche folgende Funktionen bereitstellen:
a) Änderung der Helligkeit und/oder
b) Änderung der Bildschärfe und/oder
c) Änderung des Kontrasts und/oder
d) Farbkorrekturen und/oder
e) Rauschunterdrückung und/oder
f) Reduktion von Artefakten und/oder
g) Anwendung von weiteren Filtern.

Dadurch können in Echtzeit Verbesserungen des darzustellenden Bilddatenstroms für den Betrachter erzielt werden.

Eine weitere vorteilhafte Weiterbildung des erfindungsgemäßen eingebetteten Systems zeichnet sich dadurch aus, dass die Hardware-Mittel einen FPGA (Field Programmable Gate Array) umfassen, wobei durch den FPGA folgende Funktionen bereitgestellt werden:
a) Anbindung an das protokollbasierte Netzwerk;
b) Firewall;
c) Verschlüsselung des auszugebenden kombinierten Datenstroms, wenn das eingebettete System als Server arbeitet; und
d) Entschlüsselung des mindestens einen kombinierten Datenstroms, wenn das eingebettete System als Client arbeitet.

Dabei erlaubt die Firewall über eine Regeltabelle die Filterung von IP, Port und Mac-Adressen. Eine einstellbare Logging-Funktion der Firewall erlaubt das protokolieren der gültigen und/oder ungültigen Zugriffsversuche auf das eingebettete System. Optional können frei-geschaltete Ports/IPs/Mac-Adressen automatisch nach einer gewissen Anzahl von Fehlversuchen gesperrt werden oder ein Alarm ausgelöst werden, wenn zu viele unerlaubte Zugriffe auf das eingebettete System pro Zeiteinheit erfolgen.

Der FPGA enthält außerdem eine 256 Bit AES-Verschlüsslungseinheit, die die eingehenden und ausgehenden Netzwerkdaten in Echtzeit verschlüsseln bzw. entschlüsseln kann.

Durch diese Realisierung des eingebetteten Systems wird eine möglichst hohe Netzwerksicherheit erzielt.

Vorteilhaft ist es weiterhin, wenn die Konfiguration des FPGA individuell verschlüsselt ist. Dadurch wird eine Sicherung gegen Produktpiraterie erzielt, da gegebenenfalls ausgelesene Konfigurationsdaten eines FPGA bei einem erfindungsgemäßen eingebetteten System nicht zur Konfiguration eines anderen derartigen eingebetteten Systems genutzt werden können.

Eine weitere vorteilhafte Weiterbildung des erfindungsgemäßen eingebetteten Systems zeichnet sich dadurch aus, dass die Hardware-Mittel einen DSP (Digitaler Signalprozessor) umfassen, wobei durch den DSP folgende Funktionen bereitgestellt werden:
a) Kompression mindestens eines der Bild- und Audio-Datenströme in jeweils einen kombinierten Datenstrom, wenn das eingebettete System als Server arbeitet;
b) Dekompression des mindestens einen kombinierten Datenstroms, wenn das eingebettete System als Client arbeitet; und
c) Skalierung und Ausgabe des dekomprimierten Bild- und Audio-Datenstroms über eine Schnittstelle, wenn das eingebettete System als Client arbeitet.

Durch die Wahl eines geeigneten DSP wird bei dieser Realisierung des eingebetteten Systems eine besonders hohe Leistung bei der Verarbeitung von Videodaten erreicht, was die Echtzeitfähigkeit des eingebetteten Systems sicherstellt.

Günstig ist es, wenn das erfindungsgemäße eingebettete System über
a) mindestens ein Netzwerk-Anschluss und
b) mindestens eine Schnittstelle gemäß einem Video-Standard und/oder
c) mindestens eine Schnittstelle gemäß einem Audio-Standard und/oder
d) mindestens eine Schnittstelle zu einem Datenbus und/oder
e) eine Infrarot-Schnittstelle
verfügt.

Der Netzwerk-Anschluss ist dabei zwingend erforderlich, die übrigen Schnittstellen bzw. Anschlüsse sind optional. Diese können beispielsweise HDMI-Schnittstellen - vorzugsweise ein Anschluss zur Datenannahme von einer Videoquelle und einer zur Datenausgabe an einen Bildschirm - und/oder eine PAL-Schnittstelle und/oder eine zusätzliche Stereo-Audio-Schnittstelle und/oder eine USB-Schnittstelle und/oder eine Infrarot-Schnittstelle zur Fernbedienung der angeschlossenen Videoquelle bzw. des angeschlossenen Bildschirms umfassen.

Günstig ist weiterhin, wenn das protokollbasierte Netzwerk, an das das erfindungsgemäße eingebettete System angeschlossen ist, eine Übertragungskapazität von mindestens 100 MBit pro Sekunde aufweist. Vorzugsweise handelt es sich dabei um ein Gigabit-Ethernet-Netzwerk, also ein Netzwerk, welches das Ethernet-Protokoll nutzt und eine Übertragungskapazität von mindestens 1000 MBit pro Sekunde aufweist.

Ferner wird ein Videoverteilungssystem zum Annehmen und Verteilen von mindestens einem Video-Datenstrom aus mindestens einer Videoquelle vorgeschlagen, mit:
a) einem protokollbasierten Netzwerk;
b) mindestens einem oben beschriebenen eingebetteten System, das als Server arbeitet
   und mindestens einen der Bild-Datenströme aus der mindestens einen Videoquelle annimmt, komprimiert und über das protokollbasierte Netzwerk ausgibt; und
c) mindestens einem oben beschriebenen eingebetteten System, das als Client arbeitet und mindestens einen komprimierten Datenstrom aus dem protokollbasierten Netzwerk annimmt, dekomprimiert und über eine Schnittstelle ausgibt.

Ein solches Videoverteilungssystem ist aufgrund seines modularen Aufbaus und der Eigenschaften der verwendeten eingebetteten Systeme sehr vielseitig und nahezu beliebig skalierbar bzw. erweiterbar.

Vorteilhaft ist es, wenn bei dem erfindungsgemäßen Videoverteilungssystem
a) als Videoquellen Satellitenfernseh-Empfänger oder Kabelfernsehanschlüsse oder DVBT-Empfänger oder PCs oder Mediaplayer usw. eingesetzt werden; und
b) an die Schnittstellen der eingebetteten Systeme, die als Client arbeiten, über welche die Datenströme ausgegeben werden, Bildschirme angeschlossen sind.

Vorgeschlagen wird außerdem ein Videoverteilungssystem zum Annehmen und Verteilen von mindestens einem Video-Datenstrom aus mindestens einer Videoquelle mit:
a) einem protokollbasierten Netzwerk;
b) mindestens einem eingebetteten System, das als Server arbeitet und mindestens einen der Bild-Datenströme aus der mindestens einen Videoquelle annimmt, komprimiert und über das protokollbasierte Netzwerk ausgibt; und
c) mindestens einem eingebetteten System, das als Client arbeitet und mindestens einen komprimierten Datenstrom aus dem protokollbasierten Netzwerk annimmt, dekomprimiert und über eine Schnittstelle ausgibt.

Auch für die eingebetteten Systeme dieses Videoverteilungssystems können alle vorteilhaften Realisierungen und Weiterbildungen gewählt werden, die für die weiter oben beschriebenen eingebetteten Systeme geschildert wurden.

Weitere Einzelheiten und Merkmale ergeben sich aus der nachfolgenden Beschreibung von bevorzugten Ausführungsbeispielen in Verbindung mit den Unteransprüchen. Hierbei können die jeweiligen Merkmale für sich alleine oder zu mehreren in Kombination miteinander verwirklicht sein. Die Möglichkeiten, die Aufgabe zu lösen, sind nicht auf die Ausführungsbeispiele beschränkt. So umfassen beispielsweise Bereichsangaben stets alle - nicht genannten - Zwischenwerte und alle denkbaren Teilintervalle.

Die Ausführungsbeispiele sind in den Figuren schematisch dargestellt. Gleiche Bezugsziffern in den einzelnen Figuren bezeichnen dabei gleiche oder funktionsgleiche bzw. hinsichtlich ihrer Funktionen einander entsprechende Elemente. Im Einzelnen zeigt:
Fig. 1 den schematischen Aufbau einer Ausführungsform des erfindungsgemäßen Videoverteilungssystems zum Einsatz in einem Wettbüro;
Fig. 2 den Aufbau einer einfachen Ausführungsform des erfindungsgemäßen Videoverteilungssystems;
Fig. 3 eine komplexere Ausführungsform des erfindungsgemäßen Videoverteilungssystems;
Fig. 4 schematisch den Aufbau eines erfindungsgemäßen eingebetteten Systems;
Fig. 5 schematisch den Aufbau eines erfindungsgemäßen eingebetteten Systems mit Server-Funktionalität;
Fig. 6 schematisch den Aufbau eines erfindungsgemäßen eingebetteten Systems mit Client-Funktionalität;
Fig. 7 eine Abbildung eines erfindungsgemäßen eingebetteten Systems als Modul;
Fig. 8 eine schematische Darstellung der Videodatenverarbeitung bei einem erfindungsgemäßen eingebetteten System, das als Server arbeitet;
Fig. 9 eine schematische Darstellung der Videodatenverarbeitung bei einem erfindungsgemäßen eingebetteten System, das als Client arbeitet; und
Fig. 10 eine Auswahl von Darstellungsmodi, die mit einem als Client arbeitendem erfindungsgemäßen eingebetteten System erzielbar sind; und

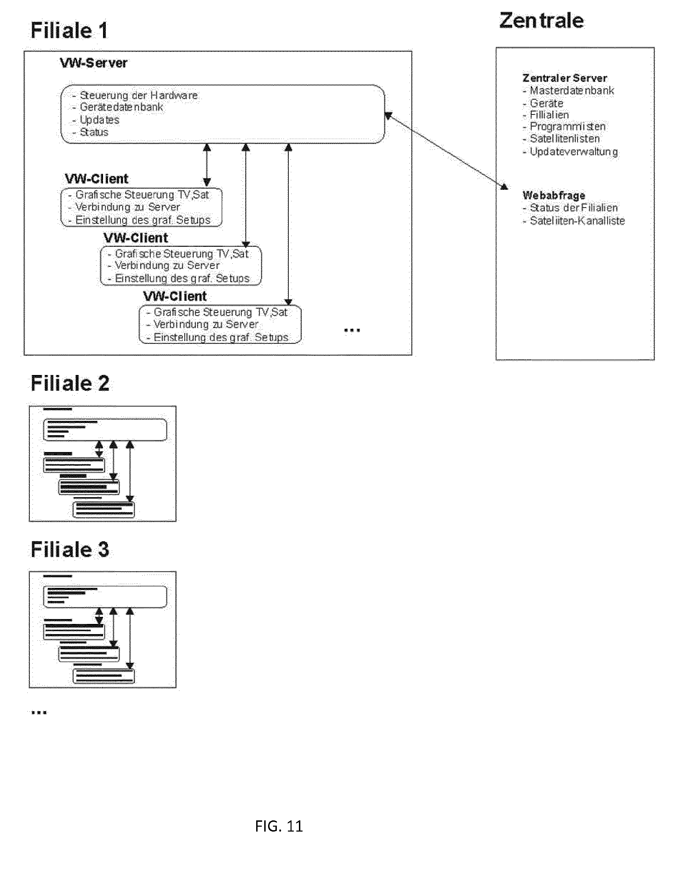

Fig. 11 einen softwaretechnischen Aufbau einer Filiale; und
Fig. 12 eine schematische Darstellung des Netzwerksicherheitsmoduls; und
Fig. 13 eine schematische Darstellung der Treiberentkopplung eines VideoWizard Moduls in einer PC-Betriebssystemumgebung; und

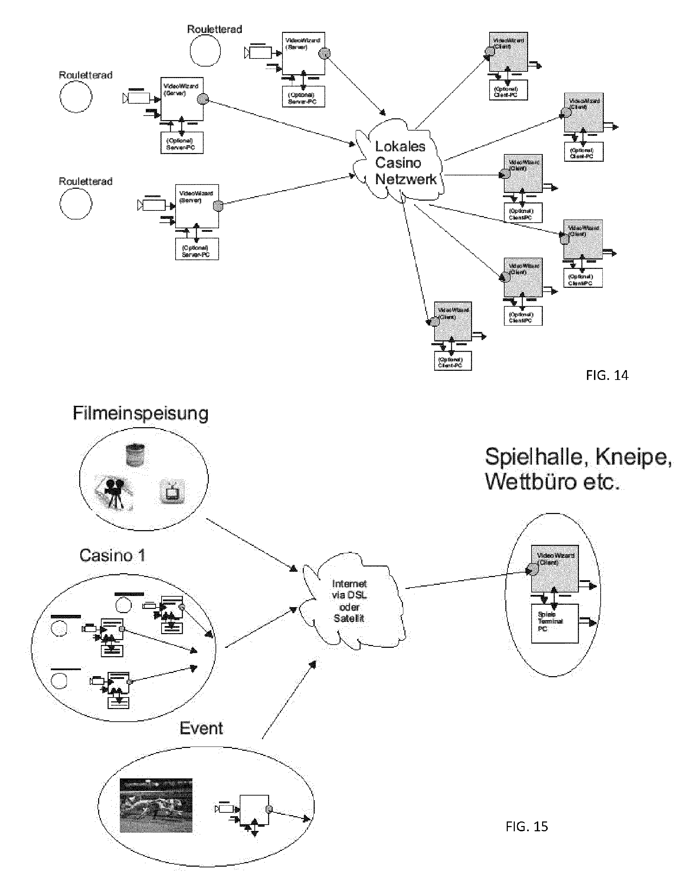

Fig. 14 eine Anwendung des erfindungsgemäßen Systems als Rouletteübertragung innerhalb eines Casinos; und
Fig. 15 eine Anwendung des Systems als Livespielübertragung außerhalb eines Casinos; und

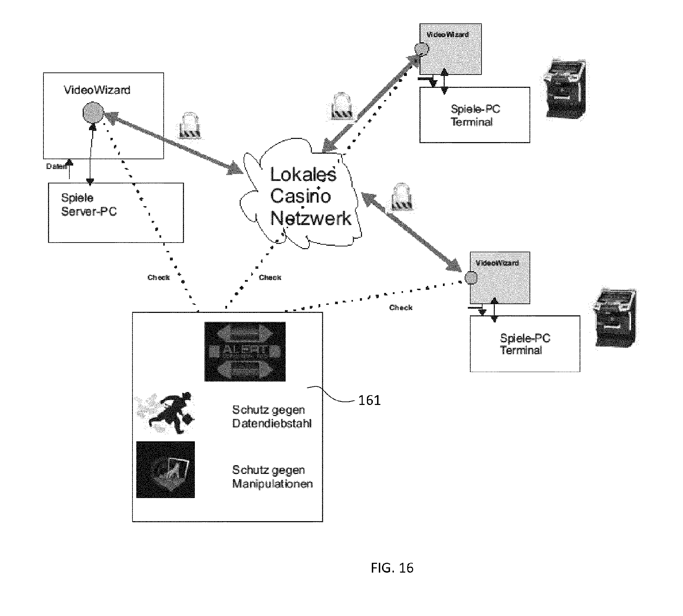

Fig. 16 eine schematische Darstellung der Sicherung der Netzwerkübertragung; und
Fig. 17 eine schematische Übersicht der Kommunikationsstruktur der Softwareeinheiten.

Die Erfindung umfasst ein modernes Videoverteilungssystem auf Basis von netzwerkbasierten multiplen H.264-Datenströmen. Dabei werden unterschiedliche Videoquellen von als Server arbeitenden eingebetteten Systemen in H.264-Datenströme konvertiert und von als Client arbeitenden eingebetteten Systemen dekodiert und an Bildschirmen dargestellt.

Der Einsatz des Videoverteilungssystems ist z. B. Wettbüros vorgesehen, bei denen im Regelfall die Bildquellen von Satellitenreceivern geliefert werden und von Shop-Mastern/Bedienern individuell an die vorhandenen TV-Monitore verteilt werden können.

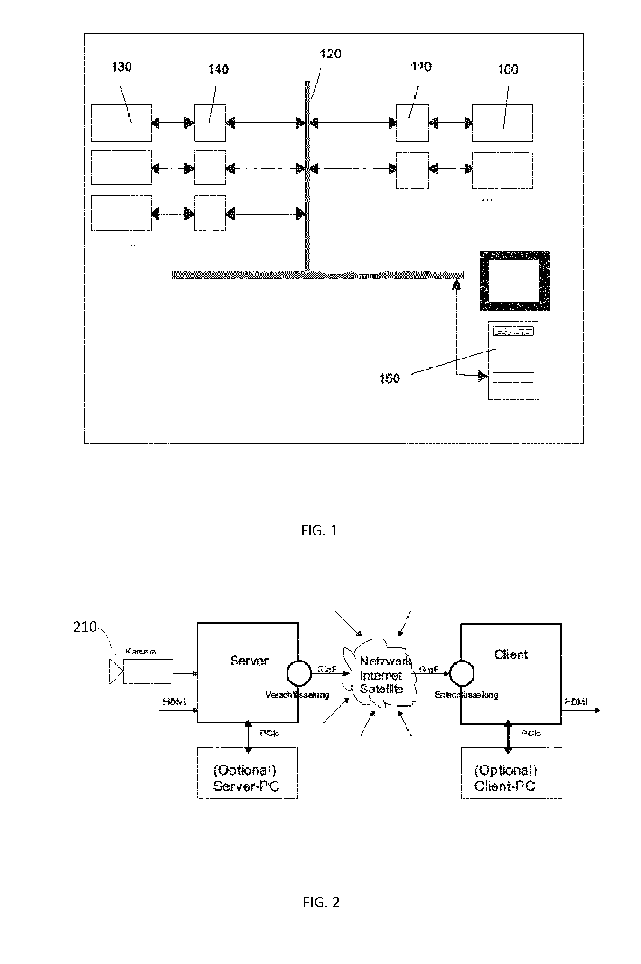

Der typische Aufbau eines erfindungsgemäßen Videoverteilungssystems in einem Wettbüro ist in Fig. 1 dargestellt und besteht in den vier Funktionseinheiten Aufnahme, Verteilung, Darstellung und Steuerung. Die Aufnahmefunktion wird durch eine variable Anzahl von Satellitenreceivern 100 realisiert, die über jeweils zugeordnete eingebettete Systeme 110, die als Server arbeiten, verfügen. Die kodierten Videoströme der Satellitenreceiver werden über ein Netzwerk 120 (mit Switch/Verteiler, VLAN) verteilt. Die Darstellung erfolgt über eine variable Anzahl von Bildschirmen 130, die ihre Bilder von zugeordneten eingebetteten Systemen 140, die als Client arbeiten, erhalten, wobei die Clients 140 individuell aus dem Angebot der Aufnahme-Server 110 die ausgewählten Bilddatenströme zur Verfügung stellen.

Die Auswahl der Bilddatenströme erfolgt dabei an lokalen Steuerungs-PC 150, an denen der Shop-Master/Bediener die Zuordnung zwischen Satellitenprogramm und Monitor dynamisch herstellen kann (Steuerung). Dazu werden grafisch die TV-Bildschirme 130 und die Satellitenreceiver 100 visualisiert.

Jedes eingebettete System 110 oder 140, das mit einem Sat-Receiver 100 oder TV-Monitor 130 verbunden ist, verfügt zusätzlich über eine Infrarotsteuerungsfunktion, die es erlaubt, das zugehörige Gerät fernzusteuern. Jeder Satellitenreceiver ist zudem optional mit einem Netzwerkanschluss verbunden, über den die Satellitenkanallisten aktualisiert und verändert werden können.

*** Die Steuerung der eingebetteten Systeme 110 oder 140 und damit der zugeordneten Geräte 100 oder 130 erfolgt physikalisch über Netzwerk 120 und strukturell über die Bedien-PC-Software. Gegebenenfalls erlauben mehrere solche Bedienstationen 150 die Steuerung der Geräte.

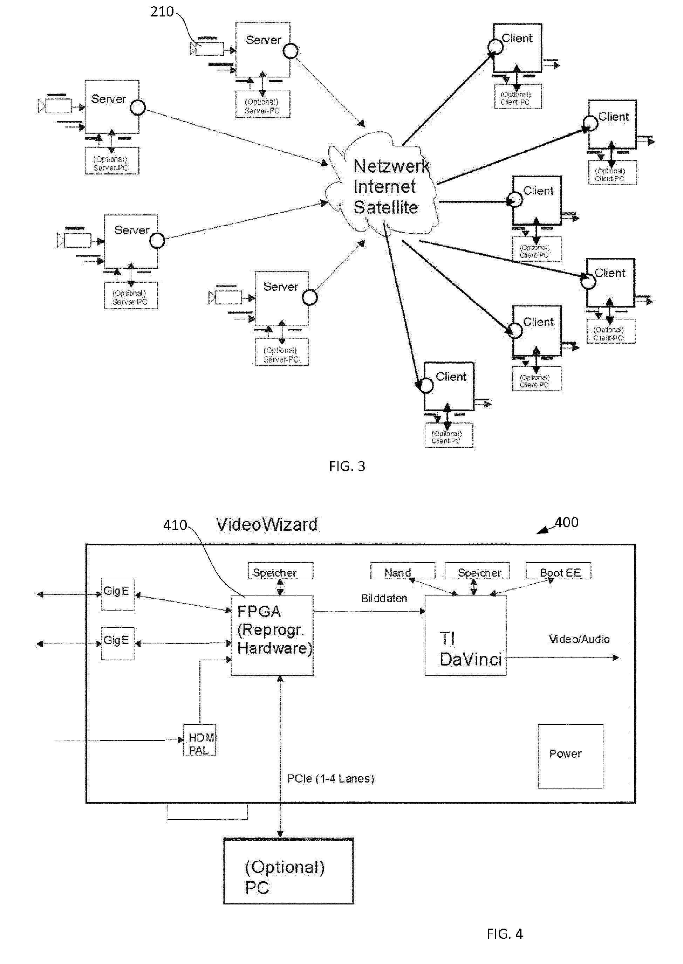

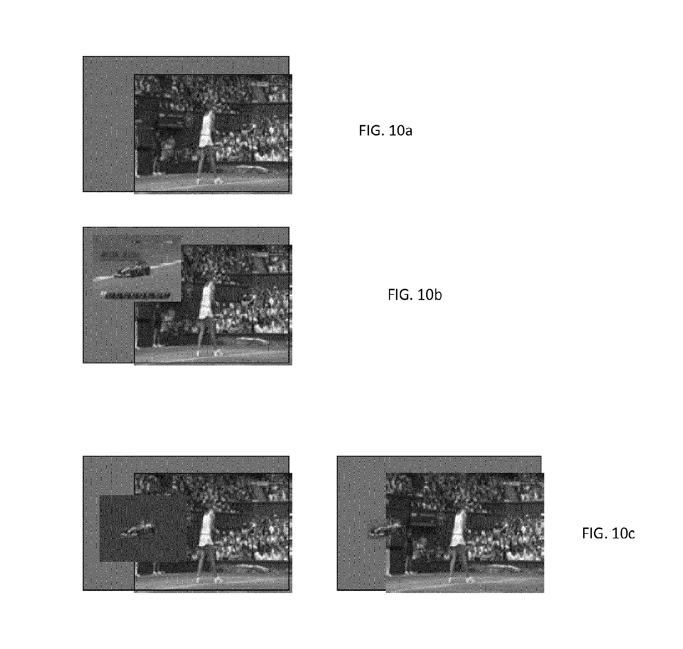

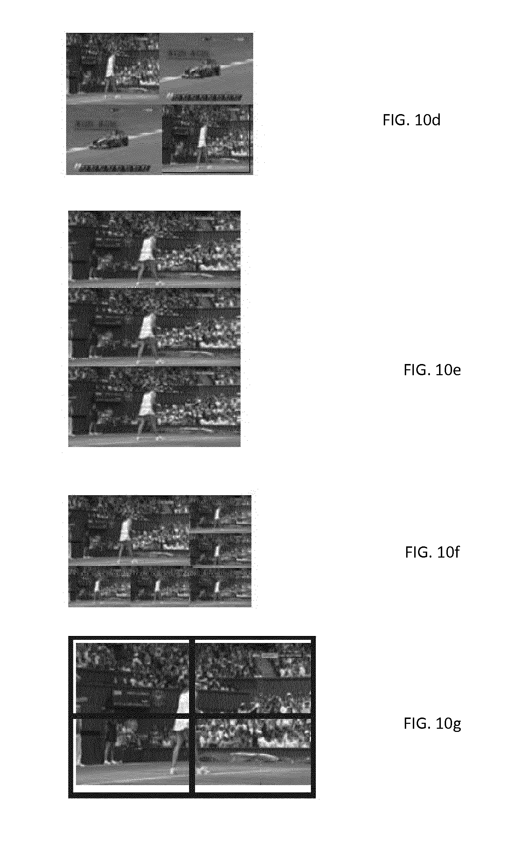

Das erfindungsgemäße System ist deutlich allgemeiner ausgelegt als bekannte derartige Systeme und verfügt über folgende Kerneigenschaften:
- Flexibles Hardware basiertes Multifunktions-Videogaming- und -Visualisierungssystem für digitales Fernsehen und digitalen Medienkontent, Kombination eines frei wählbaren globalen hardwarebasierten Videostromnetzwerks mit Spielevisualisierungen und interaktiver Livecontent Darstellung
- Nahezu beliebig skalierbar durch modularen Aufbau (siehe auch Fig. 3). Ein Client kann auf mehrere hundert Serverströme zugreifen. Einzige Beschränkung ist die Kapazität des verwendeten Netzwerks.
- Unterteilung in Clients und Server. Server nehmen Bilddaten auf und speisen diese ins Netzwerk ein. Clients nehmen die Netzwerkströme an und stellen diese auf sehr unterschiedliche Weise dar. Interaktive Steuerung über Netzwerk (z. B. PC; IPad, netzwerkfähiges Gerät). Mischnutzung als Client und Server gleichzeitig ist möglich.
- Unterschiedliche Quellen, die lokal oder remote (global weltweit!)über Satellit oder Netzwerk eingespeiste werden können (Livecams, Digital und Analog TV Quellen, Harddisk, Festplattenkonserve, Media Player etc.).
- Auflösung bis zu Full HD
- Aufnahme der Bildquellen und Echtzeitkodierung nach modernsten H.264-Verfahren in Hardware (Datenreduktion zum Versenden über Netzwerk)
- Dekodierung von mehreren H.264 Quelldatenströmen pro Client Modul.
- Unterschiedliche Visualisierungsmodi durch den Client (siehe auch Fig. 10):
   ○ 1 Strom
   ○ 2 Ströme gleichzeitig
   ○ 4 Ströme gleichzeitig pro TV
   ○ 3 Ströme rotiert
   ○ 6 Ströme etc,
   ○ Videowandmodus, bei der ein oder mehrere Ströme auf eine Wand aus vielen Monitoren verteilt werden können
   ○ Überblendmodus verschiedener Streams (Blue Box),
   ○ Ein/Überblendung von Livestreams in Gameandwendung.
   ○ Interaktive Steuerung des Modus von Anwender
   ○ Replay Funktion von Videoströme on Demand
- Ver- und Entschlüsselung der Datenströme in Echtzeit in Hardware.
- Interaktive Möglichkeit, Videoinhalte erneut zu zeigen oder die Datenströme und Darstellungsmodi interaktiv zu ändern.
- Übertragung über Netzwerk und Verteilung über Switch-System (z. B. Gigabit-Ethernet, UDP Protokoll usw.)
- Verwendung von kombinierter FPGA und DSP/Spezialchiptechnologie (Echtzeithardware)

Das Basiskonzept des Videoverteilungssystems und des eingebetteten Systems zur Videoverarbeitung ist schematisch in Fig. 2 dargestellt und basiert auf zwei funktionalen Einheiten in Kombination: die H.264 Videofunktionen zur Kompression und Dekompression und die Funktionen zur Netzwerksicherheit mit Hardware-Firewall und Echtzeitdatenverschlüsselung.

### H.264 Videoeinheit

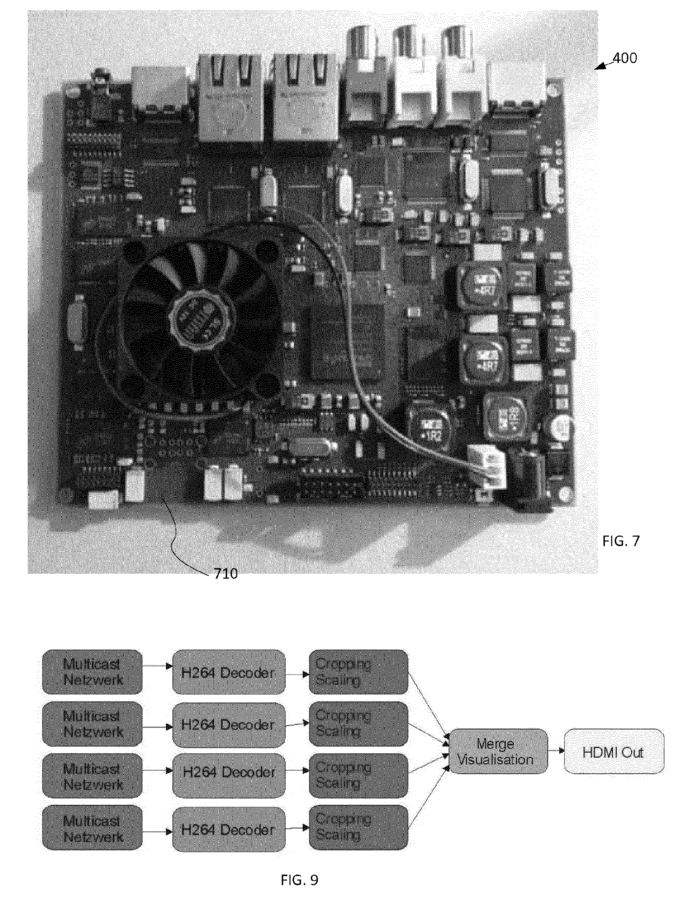

Die Videoeinheit des eingebetteten Systems besteht aus einem oder mehreren H.264-Encodern, die Bilddaten in Echtzeit mit dem modernen H.264-Verfahren komprimieren können, und einem oder mehreren H.264-Decodern, die mehrere komprimierte Bilddatenströme gleichzeitig decodieren und darstellen können. Bild- und Tondaten werden über ein Kamerasystem oder eine HDMI/PAL-Quelle mit bis zu 60 Bildern pro Sekunde aufgenommen und an ein eingebettetes System, das als Server arbeitet, weitergeleitet, welches diese Daten aufbereitet, aufzeichnet und in ein H.264-Datenformat komprimiert. Die Bilddatenströme können dann entweder unkomprimiert an einen PC oder einen Monitor übertragen werden oder über eine Netzwerkverbindung weitergeleitet werden. Dies ist in Fig. 9 schematisch dargestellt.

Als Bilddatenquelle dienen GigE-Vision-kompatible Kameras, Sattelitenreceiver mit HDMI-Ausgabe, DVD-Player oder sonstige zur HDMI-Ausgabe fähige Geräte.

Das eingebettete System verfügt zusätzlich über die entgegengesetzte Funktionalität (Client). Es können sowohl H.264- als auch MPEG2-Datenströme eingespeist werden, die in diesem eingebetteten System in Echtzeit dekomprimiert werden und entweder rekodiert werden können oder direkt über HDMI ausgegeben werden. Dies ist in Fig. 10 schematisch dargestellt. Dabei ist es sowohl möglich, Videos im progressiven als auch im interlaced-(Zeilensprungverfahren) Datenformat abzuspielen und bei Bedarf zu deinterlacen.

Fig. 10a zeigt dabei einen einzelnen Video-Datenstrom, der auf einer Anzeige (LCD, LED, OLED, TV etc. Bildschirm) skaliert und positioniert dargestellt ist und mit einer Hintergrundfarbe hinterlegt ist.

Fig. 10b zeigt zwei einzelne Video-Datenströme, beide skaliert und positioniert ist und mit einer Hintergrundfarbe hinterlegt. Einer der beiden Videos ist kleiner skaliert und im Vordergrund.

Fig. 10c zeigt zwei einzelne Video-Datenströme, beide skaliert und positioniert ist und mit einer Hintergrundfarbe hinterlegt. Einer der beiden Videos ist kleiner skaliert und in einer Verschneidung (blending) mit dem anderen Video.

Fig. 10d zeigt vier einzelne Video-Datenströme, alle vier skaliert und fix (nicht überlappend) positioniert.

Fig. 10e zeigt drei einzelne Video-Datenströme, alle drei skaliert und 90° rotiert und fix (nicht überlappend) positioniert.

Fig. 10f zeigt sechs einzelne Video-Datenströme, alle sechs skaliert und fix (nicht überlappend) positioniert.

Fig. 10g zeigt einen Video-Datenstrom auf einer mit 4 Bildschirmen realisierten VideoWand (VideoWall), wobei jeder der 4 Bildschirme einen entsprechenden Teilausschnitt eines gesamten zu zeigenden Bildes wiedergibt.

Das gesamte System ist so aufgebaut, dass physikalisch nur ein einziger Typ eingebettetes System (VideoWizard Modul) benötigt wird. Dieses eingebettete System ist auf Sicherheit in Bezug auf die Datenströme, aber auch in Bezug auf Produktpiraterie ausgelegt.

Das Videoverteilungssystem ist dabei so konzipiert, dass Systeme mit über 100 Servern und Clients in einem einzelnen Gigabit-Netzwerkstrang realisiert werden können (dies ist von der Auflösung der Datenströme abhängig). Alternativ kann der Datenstrang baumartig kaskadiert werden. Ein System mit vielen Komponenten ist in Fig. 3 schematisch dargestellt.

Die zweite gleichzeitige Funktionalität des eingebetteten Systems besteht in einer Netzwerksicherheitsfunktionalität, die über eine in Hardware implementierte Firewall und AES-Echtzeitdatenverschlüsselung die Datenübertragungssicherheit massiv erhöht. Die Kernfunktionen sind dabei im vorliegenden Fall eine 256 Bit AES Verschlüsselung des Netzwerkverkehrs sowie eine Hardware-Firewall mit Portfreischaltung und Logging-Funktion

Genereller Aufbau des eingebetteten Systems:
Konzeptionell besteht das eingebettete System 400 aus einer einzelnen Baugruppe bzw. einem Modul ("VideoWizard Hardware"), die bzw. das durch eine Basisplatine 710 ergänzt wird, die die zusätzlichen Funktionen für den Standalone-Betrieb enthält.

Funktional kann das Modul die Serverfunktionen, die Clientfunktionen und die Netzwerksicherheitsfunktionen realisieren. Diese sind nachfolgend detaillierter beschrieben.

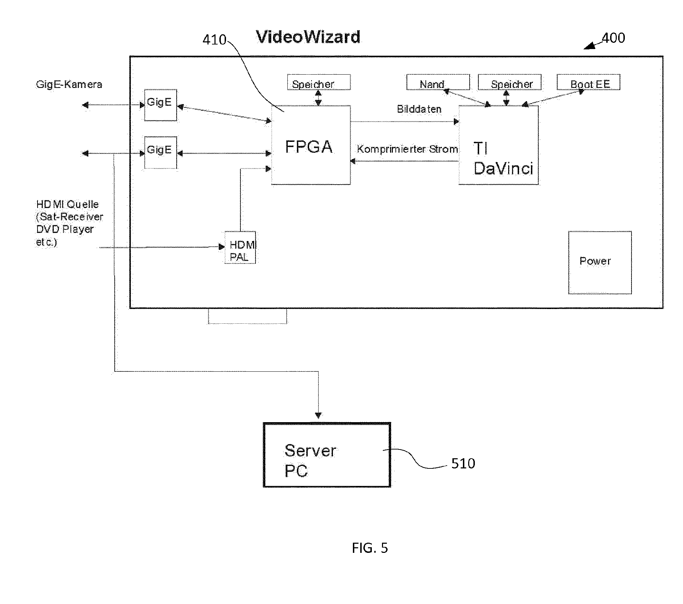

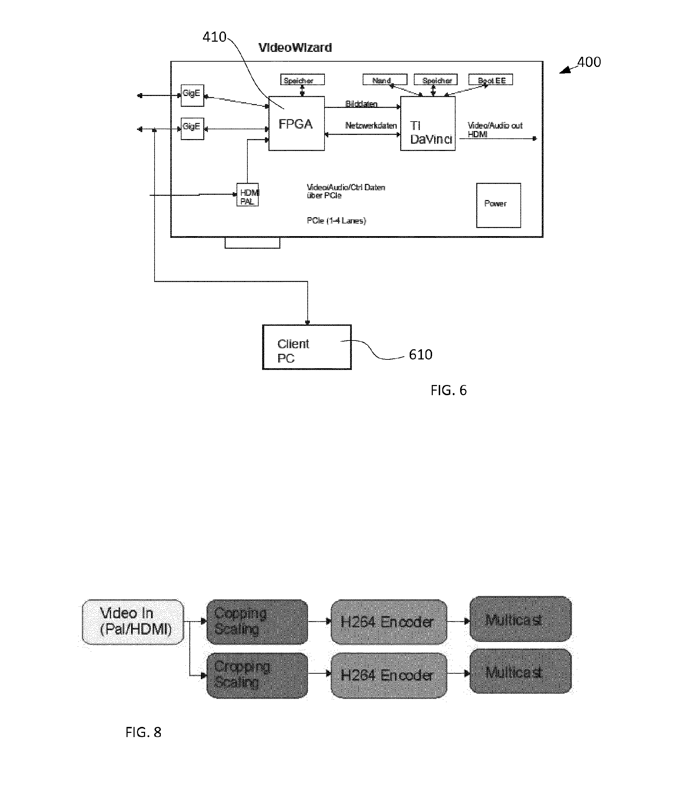

Das eingebettete System besteht vom Aufbau her (siehe Fig. 5 und Fig. 8) aus einer Kombination von FPGA- und Embedded Prozessor, GPU und Spezialhardware-Technologie (alle drei Funktionen im eingesetzten DSP).

Dabei teilen sich beide Einheiten unterschiedliche Funktionen. Die Funktionalität des FPGAs 410 wird für die Echtzeitverarbeitung und Aufbereitung der GigE-Daten der Kamera 210 benötigt, die Verarbeitung von HDMI Inputdaten, und insbesondere PC-Anbindung und Sicherheitsaspekten benötigt, der DSP realisiert die die DVI-Ausgabe und Skalierung sowie die H.264 Datenverarbeitung als Encoder/Decoder.

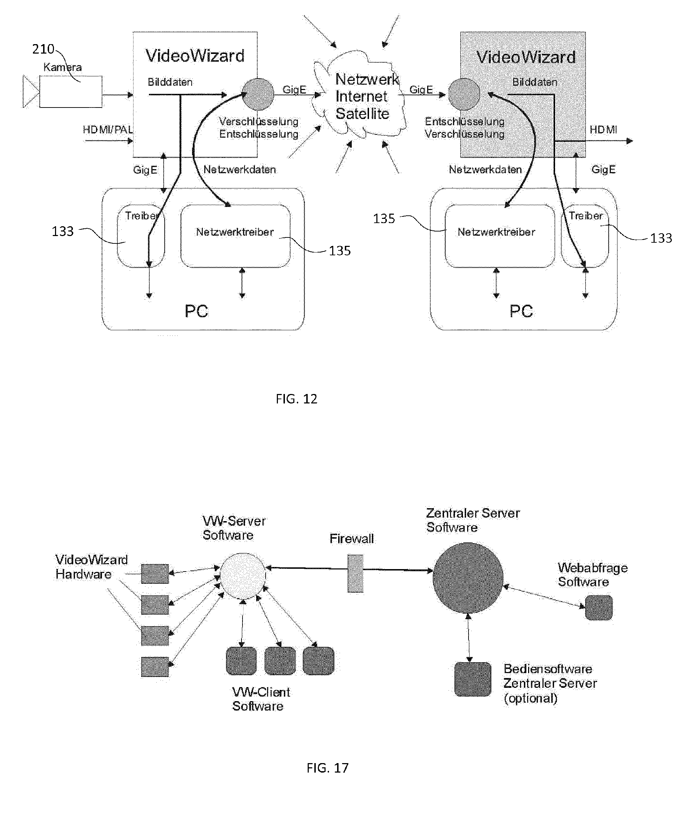

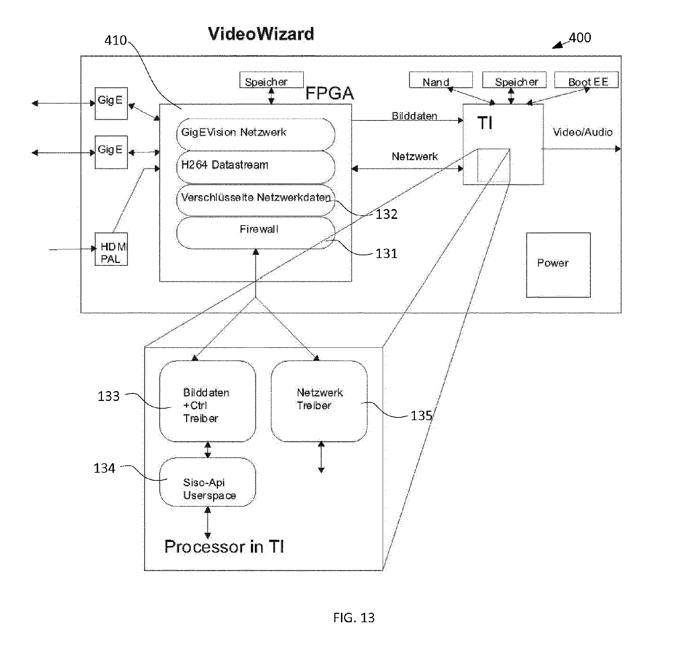

Vorteilhafterweise sind ist durch das eingebettete System eine Treiberentkopplung des VideoWizard Moduls für (beispielsweise verschiedene Betriebssysteme wie Windows XP Embedded und Linux) möglich, bei dem das als PC-Steckkarte ausgebildete VideoWizard Modul als Netzwerkkarte in der Betriebssystemumgebung eingeblendet wird. Die Verbindung ist dabei ein Netzwerktreiber, der die Verwendung aller standardisierten Netzwerkprogrammes des Betriebssystems erlaubt. Die zweite Zugriffsschnittstelle geht über eine Low- Level Anwenderbibliothek, die die notwendigen Steuer-, Bilddaufnahme- und DMA-Funktionen zur Verfügung stellt. Der FPGA kann in Kombination mit dem TI Coprozessor die Netzwerkfunktionen übernehmen. Es sind beispielsweise ein Bilddaten - und Control Treiber 133 in Verbindung mit einem Siso-API Userspace 134 vorgesehen sowie einem separaten Netwerktreiber 135 (vgl. Fig. 13 und Fig. 12).

### Serverfunktionalität

Die Serverfunktionalität des eingebetteten Systems ist in Fig 5 sowie teilweise in Fig. 12 (linkerhand des Netzwerkes) schematisch dargestellt und besteht aus folgenden Detailfunktionen:
- Aufnahme von HDMI Datenströmen bis 1920 x 1080 p60 (progressive, 60Hz) oder Kameradatenströmen;
- Kompression der Bild- und Audio-datenströme im H.264 Format;
- Verpacken von Steuerungs- und Audiodaten in den H.264-Datenstrom;
- Standalone-Fähigkeit mit Zugriff (über Server PC 510) via Gigabit-Ethernet auf interne Register des eingebetteten Systems;
- Individuelle FPGA-Sicherung gegen Produktpiraterie;
- AES-Verschlüsselung des Datenstroms;
- Versenden der komprimierten Daten über GigE-Netzwerk.

### Clientfunktionalität

Die Clientfunktionalität des eingebetteten Systems ist in Fig. 6 sowie teilweise in Fig. 12 (rechterhand des Netzwerkes) schematisch dargestellt und besteht aus folgenden Detailfunktionen:
- Annahme der komprimierten Daten bzw. eines Datenstromes über GigE-Netzwerk;
- AES-Entschlüsselung des Datenstroms;
- Dekompression der Bild- und Audiodaten aus dem H.264-Format bzw. Extraktion der Steuerungsdaten aus dem Datenstrom;
- Gegebenenfalls Dekompression von MPEG2-Bilddatenströmen;
- Deinterlacerfunktion mit hoher Qualität zur Realisierung von progressiven Bildmaterial;
- Bildskalierung;
- Restauration eines Bilddatenstroms mit 60 Bildern pro Sekunde aus den H.264-Datenströmen;
- Standalone-Fähigkeit mit Zugriff (über Client PC 610) via Gigabit-Ethernet auf interne Register des eingebetteten Systems;
- Individuellen FPGA-Sicherung gegen Produktpiraterie;
- Ausgabe der Video-, Audio- und Steuerungsdaten;

Das eingebettete System (der VideoWizard) kann vorteilhafterweise in kombinierten Modi eingesetzt werden. So ist zum Beispiel eine Mischung aus Client und Server möglich (mit einer Auswahl an Teilfunktionen) oder eine Rekodierung von mehreren Inputdatenströmen zu neuen Ausgangsströmen.

### Netzwerkfunktion (Firewall und Datenverschlüsselung)

Die Netzwerkfunktionalität des eingebetteten Systems besteht in einer in Hardware implementierten Firewall und AES-Echtzeitdatenverschlüsselung, wodurch die Datenübertragungssicherheit massiv erhöht wird. Die Kernfunktionen sind dabei im vorliegenden Fall eine 256 Bit AES-Verschlüsselung des Netzwerkverkehrs sowie eine Hardware-Firewall 131 mit Portfreischaltung und Logging-Funktion. Im Detail übernimmt vor allem der FPGA 410 die Netzwerkfunktionen (Fig. 13).
- Dabei enthält der FPGA eine 256 Bit AES-Echtzeit-Verschlüsslungseinheit 132, die die eingehenden und ausgehenden Netzwerkdaten ver- bzw. entschlüsselt.
- Es kann zwischen verschiedenen H.264 Datenströmen ausgewählt werden, die per Netzwerk in das/aus dem eingebetteten System übertragen werden.
- Die Firewall 131 erlaubt über eine Regeltabelle die Filterung von IP, Port und Mac-Adressen.
- Eine einstellbare Logging-Funktion der Firewall 131 erlaubt das Protokolieren der gültigen/ungültigen Zugriffsversuche auf das eingebettete System.
- Optional können freigeschaltete Ports/IPs/Mac-Adressen automatisch nach einer gewissen Anzahl von Fehlversuchen gesperrt werden oder ein Alarm ausgelöst werden, wenn zu viele unerlaubte Zugriffe pro Sekunde auf das eingebettete System erfolgen. Diesbezüglich sind im System Fehlversuch-Überwachungsmittel vorgesehen, die das Auftreten von Fehlversuchen über einen definierten Schwellwert überwachen.

### Sicherheit und Stabilität

### Sicherheit gegen Produktpiraterie

Durch die Möglichkeit einer im eingebetteten System gespeicherten individuellen Hardwareseriennummer kann gewährleistet werden, dass das eingebettete System nur mit einem individuellen Freischaltcode betrieben werden kann. Damit ist eine Kopie des Moduls zur Vervielfältigung zwecklos. Im System können Freischaltcode-Überwachungsmittel 161 vorgesehen sein, die ein Überwachen bzw. Abgleichen von Freischaltcodes mit einer Datenbank vornehmen können sowie gegebenenfalls ein Freishaltcode-Warnsignal abgeben können.

### Sicherheit bei den Bild- und Datenübertragung

Optional können die Bilddatenströme über das Netzwerk mit einem AES-Verschlüsselungsverfahren gesichert werden, wodurch die Daten vor einem Angreifer in der Übertragungsstrecke geschützt werden. Dies betrifft sowohl die Datenübertragung über Internet als auch die interne Übertragung in beispielsweise einem Casino.

### Hohe Stabilität und Ausfallsicherheit bei der Bilddatenübertragung und Darstellung

Durch den Einsatz von zwei unabhängigen echtzeitfähigen Rechenkomponenten wird eine hohe Betriebssicherheit bei hohen Leistungsreserven realisiert.

### Stabilität durch Unabhängigkeit

Durch die Unabhängigkeit des eingebetteten Systems von einer PC-Steuerung wird die Stabilität der Gesamtanwendung erhöht. Fällt ein Teil des Gesamtsystems aus, so arbeiten die eingebetteten Systeme unabhängig weiter.

### Netzwerksicherheit durch eine Hardware-Firewall

Durch den Einsatz einer Hardware-Firewall kann der unberechtigte Zugriff von außen durch nicht erlaubte Ports, nicht freigeschaltete IP-Adressen oder nicht autorisierte Mac-Adressen unterbunden werden. Darüber hinaus erlaubt das Logging eine Protokollierung erlaubter und unerlaubter Zugriffe. Durch den Einsatz einer Hardware-Firewall kann die Firewall nicht durch eine Überlastung versehentlich unerlaubte Pakete durchlassen, wie es bei in Software realisierten Firewalls der Fall ist.

Es sind zahlreiche Abwandlungen und Weiterbildungen der beschriebenen Ausführungsbeispiele verwirklichbar. So lässt sich ein erfindungsgemäßes eingebettetes System auch ohne Netzwerk einsetzen, wobei es gleichzeitig die Server- und Clientfunktionalität bereitstellt. Ferner lassen sich unterschiedlichste Kodierungs- und Verschlüsselungsstandards bzw. Verfahren nutzen, und ebenso lassen sich je nach gewünschtem Einsatzgebiet unter-schiedliche Schnittstellen, Netzwerkprotokolle und Netzwerkarchitekturen verwenden, ohne das Wesen der Erfindung zu verändern.

### Glossar

### Bilddatenstrom, Audiodatenstrom, Videodatenstrom, kombinierter Datenstrom

Wir verstehen darunter Datenströme mit jeweils einem Kanal des entsprechenden Inhalts (Bilder, Audio, Video). Ein kombinierter Datenstrom enthält sowohl Bild- als auch AudioDaten. Ein Videodatenstrom kann also ein Bilddatenstrom oder ein kombinierter Datenstrom sein.

### Client/Server

Unter den Begriffen Client und Server verstehen wir sogenannte Streaming-Clients bzw. Streaming-Server. Als Streaming-Client bezeichnet man einen speziellen Client für Streaming Media; dabei kann es sich entweder um Software oder um Hardware handeln. Typische Streaming-Clients unterstützen spezielle Streaming-Protokolle wie RTP, RTCP und/oder RSVP. Als Streaming-Server bezeichnet man einen dedizierten Server für die Auslieferung von Streaming Media-Daten über ein Netzwerk. Typische Streaming-Server unterstützen spezielle Streaming-Protokolle wie RTP, RTSP, RTCP und RSVP (Hilfsprotokoll für QoS-Verfahren IntServ). Streaming Media bezeichnet dabei aus einem Rechnernetz empfangene und gleich-zeitig wiedergegebene Audio- und Videodaten. Den Vorgang der Datenübertragung selbst nennt man Streaming, und übertragene ("gestreamte") Programme werden als Livestream oder kurz Stream bezeichnet.
(Nach http://de.wikipedia.org/wiki/Streaming-Client,
http://de.wikipedia.org/wiki/Streaming-Server und
http://de.wikipedia.org/wiki/Streaming_Media)

### Eingebettetes System

Der Ausdruck eingebettetes System (auch engl. embedded system) bezeichnet einen elektronischen Rechner oder auch Computer, der in einen technischen Kontext eingebunden (eingebettet) ist. Dabei übernimmt der Rechner entweder Überwachungs-, Steuerungs- oder Regelfunktionen oder ist für eine Form der Daten- bzw. Signalverarbeitung zuständig, beispielsweise beim Ver- bzw. Entschlüsseln, Codieren bzw. Decodieren oder Filtern.

### (Zitiert nach http://de.wikipedia.org/wiki/Eingebettetes_System)

### Hardware-Mittel

Unter Hardware-Mitteln verstehen wir elektronische Baugruppen, die für bestimmte Zwecke optimiert sind und ihre Funktion hauptsächlich in Echtzeit ausführen. Typischerweise werden für solche Zwecke DSPs, programmierbare Hardware wie FPGAs, Spezial-ASICs (application-specific integrated circuit) oder Kombinationen davon verwendet. Diese können auch eingebettete Mikroprozessoren (z. B. ARM-Prozessoren) enthalten. Im Rahmen dieser An-meldung umfasst der Begriff Hardware-Mittel nicht Vielzweck-Mikroprozessoren, die für die hier genannten Zwecke nicht optimiert sind. Vielzweck-Mikroprozessoren (z.B. von Intel oder AMD) finden sich typischerweise als zentrale Recheneinheiten in Personal-Computern.

### DSP

Ein Digitaler Signalprozessor oder DSP dient der kontinuierlichen Bearbeitung von digitalen Signalen (z. B. Audio- oder Videosignalen). Zur Verarbeitung von analogen Signalen wird der DSP in Verbindung mit Analog-Digital-Umsetzern und Digital-Analog-Umsetzern eingesetzt. DSPs enthalten im Vergleich zu Vielzweck-Mikroprozessoren einen auf häufig benötigte mathematische Operationen hin geschwindigkeitsoptimierten Prozessor. Einige DSPs enthalten am Ein- und Ausgang bereits die erforderlichen A/D- und D/A-Wandler.

Ein DSP muss eine bestimmte Datenmenge pro Zeiteinheit sicher verarbeiten können. Dies ergibt sich aus der Forderung einer meist fixen und von außen vorgegebenen Datenrate, mit der die Eingangsdaten in den DSP gelangen bzw. die verarbeiteten Daten wieder geschrieben werden müssen. Eine Art "Handshake" oder zeitliches Anhalten bei der Datenverarbeitung ist meistens nicht möglich. Folgende Maßnahmen können beispielsweise der Erhöhung der Verarbeitungsgeschwindigkeit dienen:
○ Spezielle synchrone, serielle Schnittstellen für die Ein- und Ausgabe
○ Sogenannte MAC-Befehle (Multiplier-Accumulator) für gleichzeitige Multiplikation und Addition in einem Maschinenzyklus
○ Adressgeneratoren für die Implementierung von Schleifen und Ringpufferstrukturen ohne softwareseitigen Overhead
○ Harvard-Architektur (Befehlsspeicher logisch und physisch vom Datenspeicher getrennt)
○ Dedizierter Hardware-Stacks.
○ Mehrmaliger Zugriff auf den Speicher in einem Zyklus

### (Zitiert nach http://de.wikipedia.org/wiki/Digitaler_Signalprozessor)

### FPGA

Ein Field Programmable Gate Array oder FPGA ist ein Integrierter Schaltkreis, in den eine logische Schaltung programmiert werden kann.

Der Begriff Programmierung ist in diesem Kontext allerdings anders zu verstehen als bei der Erstellung von Software für einen herkömmlichen Prozessor: In einem FPGA werden Schaltungsstrukturen mittels Hardwarebeschreibungssprachen oder in Form von Schaltplänen erstellt und diese Daten zwecks Konfiguration in den Baustein übertragen. Dadurch werden bestimmte Schalterstellungen aktiviert bzw. deaktiviert, was eine konkret implementierte digitale Schaltung ergibt. Man spricht daher statt von der Programmierung auch von der Konfiguration eines FPGAs. Durch die spezifische Konfiguration interner Strukturen können in einem FPGA verschiedene Schaltungen realisiert werden, bis hin zu hochkomplexen Schaltungen, wie z. B. Mikroprozessoren.

FPGAs werden vor allem dort eingesetzt, wo es auf schnelle Signalverarbeitung und flexible Änderung der Schaltung ankommt, um beispielsweise nachträgliche Verbesserungen an den implementierten Funktionen vornehmen zu können, ohne dabei direkt die physische Hardware ändern zu müssen.

Die Konfiguration erfolgt typischerweise einmal vor jedem Einsatz, wodurch der FPGA auf eine konkrete Funktion konfiguriert wird, die er jedoch wieder durch Abschalten der Betriebsspannung verliert. Meist steht dem FPGA deshalb ein nichtflüchtiger Speicher zur Seite, der die Konfiguration vorhält, dessen Inhalt aber selbst auch aktualisierbar ist.

FPGAs werden beispielsweise zur Echtzeit-Verarbeitung von einfachen bis komplexen Algorithmen genutzt, zur digitalen Signalverarbeitung im Rahmen von digitalen Filtern oder zur schnellen Fourier-Transformation, aber auch für Protokoll-Implementierungen wie Teile des Ethernet-MAC-Layers, Kodierung von digitalen Videosignalen, Verschlüsselung von Daten und Fehlerkorrekturverfahren, sowie für digitale Speicheroszilloskope.

### (nach http://de.wikipedia.org/wiki/Fpga)

### Ethernet, GigE

Ethernet ist eine Technologie, die Software (Protokolle usw.) und Hardware (Kabel, Verteiler, Netzwerkkarten usw.) für kabelgebundene Datennetze spezifiziert. Sie ermöglicht den Datenaustausch in Form von Datenpaketen zwischen den in einem lokalen Netz (LAN) angeschlossenen Geräten. Derzeit sind Übertragungsraten von 10 Megabit/s, 100 Megabit/s (Fast Ethernet), 1000 Megabit/s (Gigabit-Ethernet, GigE) bis 100 Gigabit/s spezifiziert. In seiner traditionellen Ausprägung erstreckt sich das LAN dabei nur über ein Gebäude; auch Ethernet über Glasfaser hat eine begrenzte Reichweite.

### Firewall

Eine Firewall ist ein Sicherungssystem, das ein Netzwerk oder einen einzelnen Computer vor unerwünschten Netzwerkzugriffen schützt. Die Firewall dient dazu, den Netzwerkzugriff zu beschränken, basierend auf Absender- oder Zieladresse und genutzten Diensten. Sie überwacht den Datenverkehr und entscheidet anhand festgelegter Regeln, ob bestimmte Netzwerkpakete durchgelassen werden oder nicht. Die einfache Filterung von Datenpaketen anhand der Netzwerkadressen ist die Grundfunktion aller Firewalls. Zur Aufgabe einer sogenannten Paketfilter-Firewall gehört es, Netzwerkpakete anhand ihrer Netzwerkadresse zu sperren oder durchzulassen. Dafür wertet sie die Header-Informationen der Netzwerkpakete aus. Die einfache Paketfilterung arbeitet mit statischen Regeln und betrachtet jedes Netzwerkpaket einzeln, stellt also keine Beziehungen zu den vorherigen Netzwerkpaketen her. Demgegenüber gibt es eine erweiterte Form der (zustandsgesteuerten) Paketfilterung, die solche Beziehungen erfasst. So wird der Zugriff auf das Quellsystem, das eine Kommunikation angefordert hat, weiter eingeschränkt.

### HD

Diese Abkürzung steht für "High Definition" (Engl.), wobei in unserem Fall Bildauflösungen von 1280 × 720 oder 1920 × 1080 Pixeln gemeint sind, wobei die höhere Auflösung auch als "Full HD" bezeichnet wird.

Die Videoauflösung umfasst die gleichen Parameter wie die Bildauflösung (Zeilen und Spalten oder Pixelzahl, Seitenverhältnis) und erweitert diese um den temporalen Aspekt der Bildwiederholrate. Bei ihr muss zwischen der Wiederholung von Teil- (meist Halbbilder im Zeilensprungverfahren, *interlaced*) und Vollbildern (frames, *progressive* scan) unterschieden wer-den. Übliche Bildwiederholraten sind 24, 25, 50 oder 60 Hz. Im HDTV-Bereich sind 720p und 1080i üblich. Von Full HD spricht man ab 1080p25, d. h. 1920 × 1080 Pixel, progressive, 25 Hz. (Nach http://de.wikipedia.org/wiki/Videoauflösung, http://de.wikipedia.org/wiki/Full_HD und http://de.wikipedia.org/wiki/High_Definition_Television)

### Video

Unter Video verstehen wir bewegte Bilder bzw. Bildströme, sowohl mit als auch ohne Ton.

### Zeilensprungverfahren, Vollbildverfahren

Das Zeilensprungverfahren (engl. Interlace) dient der Verringerung des Bildflimmerns in der Fernsehtechnik. Es wurde mit der Absicht entwickelt, die Signale mit einer möglichst geringen Bandbreite flimmerfrei anzuzeigen. Dabei baut sich ein vollständiges Bild (Frame) aus zwei unterschiedlichen Halbbildern auf. Bei der Bildentstehung werden für das erste Halbbild nur die ungeraden Zeilen des Ausgabegeräts dargestellt; ist dieses komplett, wird das zweite Halbbild aus den geraden Zeilen aufgebaut. Das menschliche Auge nimmt die einzelnen Zeilen nicht als flimmernd, sondern als wandernd wahr und integriert die Zeilensprünge im Idealfall zu einem Gesamtbild.

Das Vollbildverfahren (engl. Progressive Scan) bezeichnet eine Technik beim Bildaufbau, bei der das Ausgabegerät - anders als beim Zeilensprungverfahren - keine zeilenverschränkten Halbbilder gesendet bekommt, sondern mit echten Vollbildern gespeist wird.

(Zitiert nach http://de.wikipedia.org/wiki/Zeilensprungverfahren

und http://de.wikipedia.org/wiki/Vollbildverfahren)

## Patentansprüche

1. Eingebettetes System zur Videoverarbeitung mit Hardware-Mitteln zum Realisieren folgender Funktionen:
a) einer Server-Funktion, wobei zum Realisieren der Server-Funktion die folgenden Funktionen realisiert sind:
a1) Annahme von mindestens einem Bild-, mindestens einem Audio-Datenstrom;
a2) Kompression mindestens eines der Bild- und Audio-Datenströme in jeweils einen kombinierten Datenstrom;
a3) Ausgabe mindestens eines der kombinierten Datenströme über ein protokollbasiertes Netzwerk;
b) einer Client-Funktion, wobei zum Realisieren der Client-Funktion die folgenden Funktionen realisiert sind:
b1) Annahme mindestens eines kombinierten Datenstroms aus dem protokollbasierten Netzwerk;
b2) Dekompression des mindestens einen kombinierten Datenstroms;
b3) Ausgabe des dekomprimierten Bild- und Audio-Datenstroms; und
c) wobei die Hardware-Mittel derart ausgelegt sind, dass sie einen kontinuierlichen kombinierten Datenstrom komprimieren und dekomprimieren können.

2. Eingebettetes System nach dem vorhergehenden Anspruch, **dadurch gekennzeichnet,**
**dass** die Hardware-Mittel derart ausgelegt sind, dass sie einen kontinuierlichen Bild-und Audio-Datenstrom mit mindestens 60 Bildern pro Sekunde und mit einer Auflösung von mindestens 1920 x 1080 Pixeln ohne Datenstau komprimieren und dekomprimieren können.

3. Eingebettetes System nach einem der vorhergehenden Ansprüche, **dadurch gekennzeichnet,**
**dass** die Kompression der Datenströme gemäß dem H.264- oder dem H.265-Standard erfolgt.

4. Eingebettetes System nach einem der vorhergehenden Ansprüche, **dadurch gekennzeichnet, dass**
a) die Server-Funktion eine Funktion zum Verschlüsseln des kombinierten Datenstroms realisiert; und dass
b) die Client-Funktion eine Funktion zum Entschlüsseln des mindestens einen kombinierten Datenstroms realisiert.

5. Eingebettetes System nach einem der vorhergehenden Ansprüche, **gekennzeichnet durch**
a) Hardware-Mittel zur Annahme von mehr als einem kombinierten Datenstrom über das Protokoll-basierte Netzwerk;
b) Hardware-Mittel zur Dekompression von mehr als einem kombinierten Datenstrom;
c) Hardware-Mittel zur Skalierung und/oder Rotation und/oder Vereinigung und/oder Überblendung von mehr als einem dekomprimierten Bild- und Audio-Datenstrom;
d) Hardware-Mittel zur gemeinsamen Ausgabe von mehr als einem dekomprimierten Bild- und Audio-Datenstrom zur gleichzeitigen Darstellung an einem Bildschirm; und
e) Hardware-Mittel zur geteilten Ausgabe von einem oder mehreren kombinierten Datenströmen an mehrere Bildschirme, die als Videowand angeordnet sind.

6. Eingebettetes System nach einem der vorhergehenden Ansprüche, **gekennzeichnet durch**
Hardware-Mittel zum Konvertieren eines im Zeilensprungverfahren aufgenommenen Bilddatenstroms zum Vollbildverfahren.

7. Eingebettetes System nach einem der vorhergehenden Ansprüche, **gekennzeichnet durch**
a) ein Speichermodul mit einem BIOS;
b) ein Speichermodul mit einem Betriebssystem; sowie
c) Mittel zum Annehmen von Steuersignalen über das protokollbasierte Netzwerk.

8. Eingebettetes System nach einem der vorhergehenden Ansprüche, **gekennzeichnet durch**
Mittel zum Ausgeben von Steuersignalen zur Fernbedienung angeschlossener Geräte.

9. Eingebettetes System nach einem der vorhergehenden Ansprüche, **gekennzeichnet durch**
a) Hardware-Mittel zur Zwischenspeicherung und wiederholten Ausgabe des mindestens einen kombinierten Datenstroms; und
b) Mittel zur interaktiven Steuerung des eingebetteten Systems **durch** den Betrachter des mindestens einen ausgegebenen Datenstroms.

10. Eingebettetes System nach einem der vorhergehenden Ansprüche, **gekennzeichnet durch**
Hardware-Mittel zur Verbesserung der Bildqualität des Bildddatenstroms, welche folgende Funktionen bereitstellen:
a) Änderung der Helligkeit und/oder
b) Änderung der Bildschärfe und/oder
c) Änderung des Kontrasts und/oder
d) Farbkorrekturen und/oder
e) Rauschunterdrückung und/oder
f) Reduktion von Artefakten und/oder
g) Anwendung von weiteren Filtern.

11. Eingebettetes System nach einem der vorhergehenden Ansprüche, **dadurch gekennzeichnet,**
**dass** die Hardware-Mittel einen FPGA umfassen, wobei durch den FPGA folgende Funktionen bereitgestellt werden:
a) Anbindung an das protokollbasierte Netzwerk;
b) Firewall;
c) Verschlüsselung des auszugebenden kombinierten Datenstroms, wenn das eingebettete System als Server arbeitet; und
d) Entschlüsselung des mindestens einen kombinierten Datenstroms, wenn das eingebettete System als Client arbeitet.

12. Eingebettetes System nach dem vorhergehenden Anspruch, **dadurch gekennzeichnet,**
**dass** die Konfiguration des FPGA individuell verschlüsselt ist.

13. Eingebettetes System nach einem der vorhergehenden Ansprüche, **dadurch gekennzeichnet,**
**dass** die Hardware-Mittel einen DSP umfassen, wobei durch den DSP folgende Funktionen bereitgestellt werden:
a) Kompression mindestens eines der Bild- und Audio-Datenströme in jeweils einen kombinierten Datenstrom, wenn das eingebettete System als Server arbeitet;
b) Dekompression des mindestens einen kombinierten Datenstroms, wenn das eingebettete System als Client arbeitet; und
c) Skalierung und Ausgabe des dekomprimierten Bild- und Audio-Datenstroms über eine Schnittstelle, wenn das eingebettete System als Client arbeitet.

14. Eingebettetes System nach einem der vorhergehenden Ansprüche, **gekennzeichnet durch**
a) mindestens ein Netzwerk-Anschluss und
b) mindestens eine Schnittstelle gemäß einem Video-Standard und/oder
c) mindestens eine Schnittstelle gemäß einem Audio-Standard und/oder
d) mindestens eine Schnittstelle zu einem Datenbus und/oder
e) eine Infrarot-Schnittstelle.

15. Eingebettetes System nach einem der vorhergehenden Ansprüche, **dadurch gekennzeichnet,**
**dass** das protokollbasierte Netzwerk eine Übertragungskapazität von mindestens 100 MBit pro Sekunde aufweist.

16. Videoverteilungssystem zum Annehmen und Verteilen von mindestens einem Video-Datenstrom aus mindestens einer Videoquelle mit:
a) einem protokollbasierten Netzwerk;
b) mindestens einem eingebetteten System nach einem der vorhergehenden Ansprüche, das als Server arbeitet und mindestens einen der Bild-Datenströme aus der mindestens einen Videoquelle annimmt, komprimiert und über das protokollbasierte Netzwerk ausgibt; und
c) mindestens einem eingebetteten System nach einem der vorhergehenden Ansprüche, das als Client arbeitet und mindestens einen komprimierten Datenstrom aus dem protokollbasierten Netzwerk annimmt, dekomprimiert und über eine Schnittstelle ausgibt.

17. Videoverteilungssystem nach dem vorhergehenden Anspruch, wobei
a) als Videoquellen Satellitenfernseh-Empfänger oder Kabelfernsehanschlüsse oder DVBT-Empfänger oder PCs oder Mediaplayer eingesetzt werden; und
b) an die Schnittstellen der eingebetteten Systeme, die als Client arbeiten, über welche die Datenströme ausgegeben werden, Bildschirme angeschlossen sind.

18. Videoverteilungssystem zum Annehmen und Verteilen von mindestens einem Video-Datenstrom aus mindestens einer Videoquelle mit:
a) einem protokollbasierten Netzwerk;
b) mindestens einem eingebetteten System, das als Server arbeitet und mindestens einen der Bild-Datenströme aus der mindestens einen Videoquelle annimmt, komprimiert und über das protokollbasierte Netzwerk ausgibt; und
c) mindestens einem eingebetteten System, das als Client arbeitet und mindestens einen komprimierten Datenstrom aus dem protokollbasierten Netzwerk annimmt, dekomprimiert und über eine Schnittstelle ausgibt.
